# EUROPEAN PATENT APPLICATION

(11) **EP 3 261 388 A1**
(43) Date of publication of application: **27.12.2017**
(21) Application number: 16752130.1
(22) Date of filing: 18.02.2016
(51) Int. Cl.: H04W 52/02, H04W 4/04, H04W 36/18, H04W 72/04, H04W 88/08

(54) **WIRELESS COMMUNICATION SYSTEM, BASE STATION DEVICE, MOBILE STATION DEVICE, AND WIRELESS COMMUNICATION CONTROL METHOD**

(30) Priority: 20.02.2015 JP 2015031213
(71) Applicant: NEC Corporation, Tokyo 108-8001 (JP)
(72) Inventor: MITANI, Shohei, Tokyo 108-8001 (JP); TANIUCHI, Nobuhito, Tokyo 108-8001 (JP); MARUYAMA, Masaaki, Tokyo 108-8001 (JP)
(74) Representative: Vossius & Partner Patentanwälte Rechtsanwälte mbB
(86) International application number: PCT/JP2016/000876
(87) International publication number: WO 2016/132741

(57) **Abstract**

[Problem] To provide a wireless communication system, a base station device, a mobile station device, and a wireless communication control method that use a time division multiple access scheme, and enable a reduction in the power consumption of the base station.

[Solution] This wireless communication system performs communication by a time division multiple access (TDMA) scheme, and comprises a mobile station, and a base station that communicates with the mobile station and stops transmission of a signal including control information related to communication connection when there is no mobile station therearound.

## Description

### [Technical Field]

The present invention relates to a wireless communication system, a base station device, a mobile station device, and a wireless communication control method, and particularly to a wireless communication system, a base station device, a mobile station device, and a wireless communication control method that use a time division multiple access (TDMA) scheme.

### [Background Art]

A mobile communication scheme where a plurality of base stations are arranged and a mobile station continues communication with sequential handovers between its adjacent base stations in the time division multiple communication is known (Patent Literature 1 (PTL1)). This mobile communication scheme uses a time-division multiplexed slot number to communicate between a base station and a mobile station. For example, in the train radio communication, base stations are located along a railway track and a train (a mobile station) which travels on the railway track communicates with sequential handovers between base stations adjacent to the mobile station.

Because the mobile station changes its relative position to base stations by the minutes, it is necessary to switch connection (hand over) to another closer base station when the mobile station has a longer distance to its currently connecting base station.

### [Citation List]

### [Patent Literature]

[PTL1] Japanese Patent Application Laid-open No. 2009-141405

### [Summary of Invention]

### [Technical Problem]

A wireless communication system that uses a time division multiple access scheme has an issue as described below.

For example, there is an issue that it is hard to often charge or replace a battery when a base station is driven by the temporary battery. This issue is caused by the immobility of base stations unlike mobile stations. Therefore, base stations have to suppress power consumption compared with mobile stations.

An object of the present invention is to provide a wireless communication system, a base station device, a mobile station device, and a wireless communication control method that use a time division multiple access scheme, and enable reduction in the power consumption of the base station.

### [Solution to Problem]

To achieve the above-mentioned object, a wireless communication system according to the present invention is a wireless communication system for communicating under a TDMA (Time Division Multiple Access) scheme, and has:
a mobile station, and
a base station communicates with the mobile station, and stops sending a signal including control information related to communication connection when there is none of the mobile station therearound.

A base station device according to the present invention communicates with a mobile station under a TDMA (Time Division Multiple Access) scheme, and stops sending a signal including control information related to communication connection when there is none of the mobile station therearound

A mobile station device according to the present invention communicates with a base station under a TDMA (Time Division Multiple Access) scheme, wherein
a TDMA slot includes a sending slot of the base station, a sending slot of a mobile station and a searching slot of a mobile station, and
the base station is searched for in the sending slot.

A method for controlling wireless communication according to the present invention is a method for controlling wireless communication between a base station and a mobile station communicating under a TDMA (Time Division Multiple Access) scheme, wherein
the base station stops sending a signal including control information related to communication connection when there is none of a mobile station therearound.

### [Advantageous Effect of Invention]

According to the present invention, when a base station searches for and does not find a mobile station therearound, transmission of a signal including control information related to communication connection is stopped, which can reduce the power consumption related to a sending process.

### [Brief Description of Drawings]

[Fig. 1] Fig. 1 is a block diagram showing a wireless communication system of an example embodiment of the most generic concept of the present invention.
[Fig. 2] Fig. 2 is a block diagram showing a wireless communication system according to an example embodiment of the present invention.
[Fig. 3A] Fig. 3A is a flowchart for explaining behavior of a mobile station in Fig. 2.
[Fig. 3B] Fig. 3B is a flowchart for explaining one example of behavior of a base station in Fig. 2.
[Fig. 3C] Fig. 3C is a flowchart for explaining one example of behavior of the mobile station in Fig. 2.
[Fig. 4] Fig. 4 is an overview diagram for explaining a path of a mobile object and a method of arranging base stations.
[Fig. 5] Fig. 5 shows a standard TDMA slot configuration (one frame) used in a wireless communication system of this example embodiment.
[Fig. 6] Fig. 6 is a block diagram showing a transceiver of a mobile station of this example embodiment.
[Fig. 7] Fig. 7 is a block diagram showing a transceiver of a base station of this example embodiment.
[Fig. 8] Fig. 8 is a sequence diagram for explaining one example of a handover flow of this example embodiment.
[Fig. 9] Fig. 9 is time frame and space diagrams showing a beginning situation in Fig. 8.
[Fig. 10] Fig. 10 is time frame and space diagrams showing a situation after a mobile station travels.
[Fig. 11] Fig. 11 is a sequence diagram for explaining another example of a handover flow of this example embodiment.
[Fig. 12] Fig. 12 is time frame and space diagrams showing a beginning situation in Fig. 11.
[Fig. 13] Fig. 13 is time frame and space diagrams showing a situation after a first mobile station travels.
[Fig. 14] Fig. 14(a) is a block diagram showing a mobile station device of another example embodiment of the present invention, and Fig. 14 (b) is a block diagram showing a base station device of another example embodiment of the present invention.

### [Description of Embodiments]

Preferred example embodiments of the present invention are explained in details with reference to the drawings. It is noted that a direction of an arrow in the drawings shows one example and does not limit a direction of a signal between blocks.

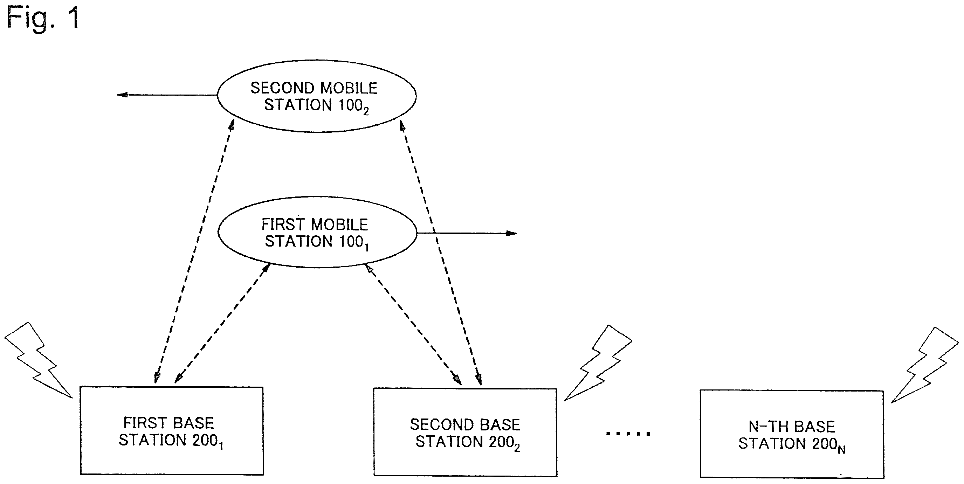

A wireless communication system of an example embodiment of the most generic concept of the present invention is explained. Fig. 1 is a block diagram showing a wireless communication system of an example embodiment of the most generic concept of the present invention.

The wireless communication system in Fig. 1 has a first mobile station 100₁, a second mobile station 100₂, a first base station 200₁, and a second base station 200₂. In Fig. 1, only four communicators of the first mobile station 100₁, the first base station 200₁, the second mobile station 100₂, and the second base station 200₂ are mainly shown, but additionally a plurality of mobile and base stations could actually exist on both sides of this figure. For example, as shown in Fig. 1, an N-th base station 200_{N} or the like could exist.

The first mobile station 100₁ and the second mobile station 100₂ travel on a path. During travel on this path, the first mobile station 100₁ and the second mobile station 100₂ switch a communication connecting destination from the first base station 200₁ to the second base station 200₂. The communication connecting destination is a target of transmitting information in both directions.

In Fig. 1, for example, the first mobile station 100₁ initially connects with the first base station 200₁, and then after a period of connecting with the first base station 200₁ and the second base station 200₂ at the same time, disconnects the communication with the first base station 200₁ and eventually moves on to a situation of communicating only with the second base station 200₂. Conversely, the second mobile station 100₂ initially connects with the second base station 200₂, and after a period of connecting with the first base station 200₁ and the second base station 200₂ at the same time, eventually moves on to a situation of communicating only with the first base station 200₁.

In an example embodiment of the present invention, for the purpose of decrease in handover instability, one mobile station is controlled to maintain connection with two base stations at the same time as long as possible. In other words, one mobile station is controlled to maintain connection with the predetermined number of base stations (the predetermined number is two or more).

The first base station 200₁ and the second base station 200₂ in Fig. 1 search for a mobile station. When a mobile station is not found therearound, the first base station 200₁ and the second base station 200₂ stop sending a signal including control information related to communication connection; that is, transmission stops. This enables power consumption relating to a sending process to reduce with the base stations of this example embodiment. The following explains preferred example embodiments of the present invention in more detail.

### <Example embodiments>

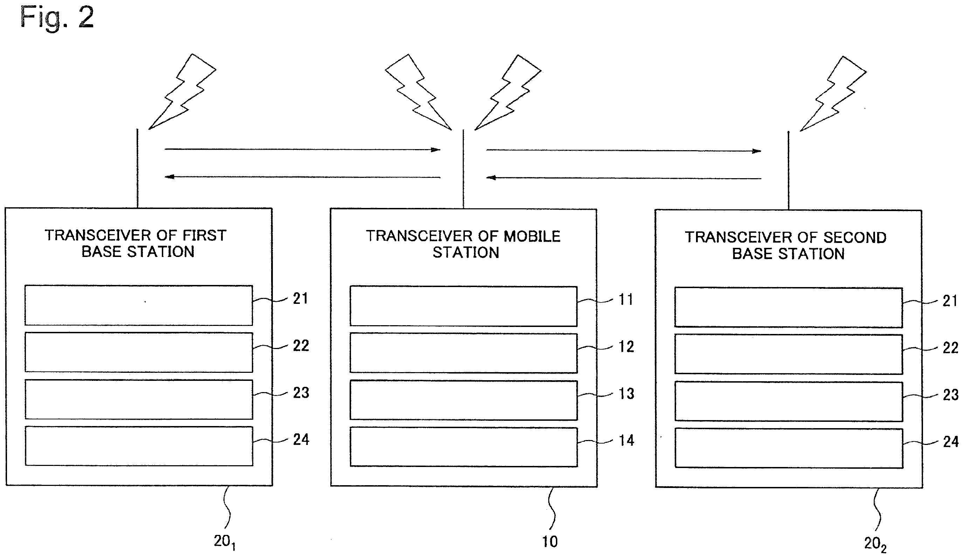

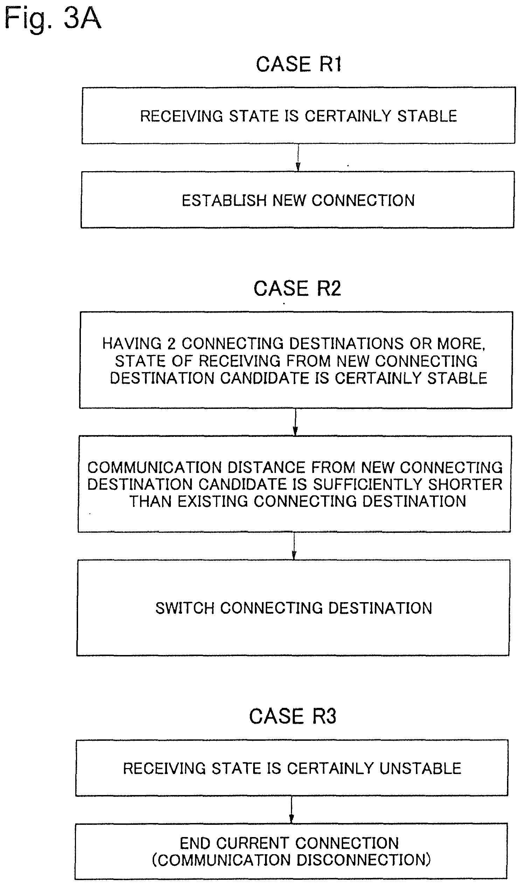

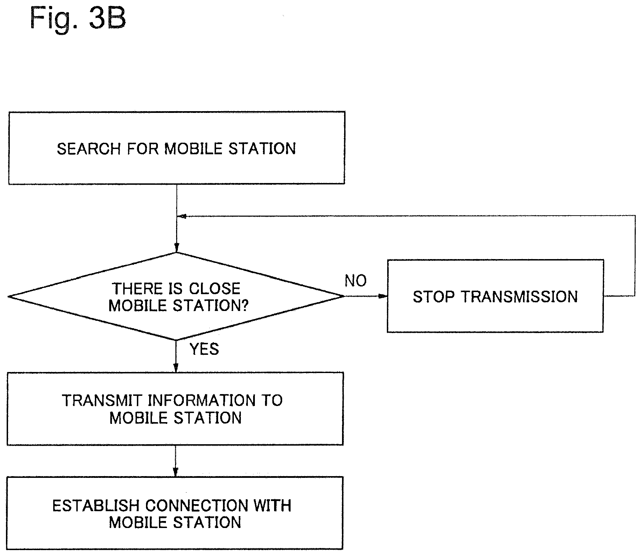

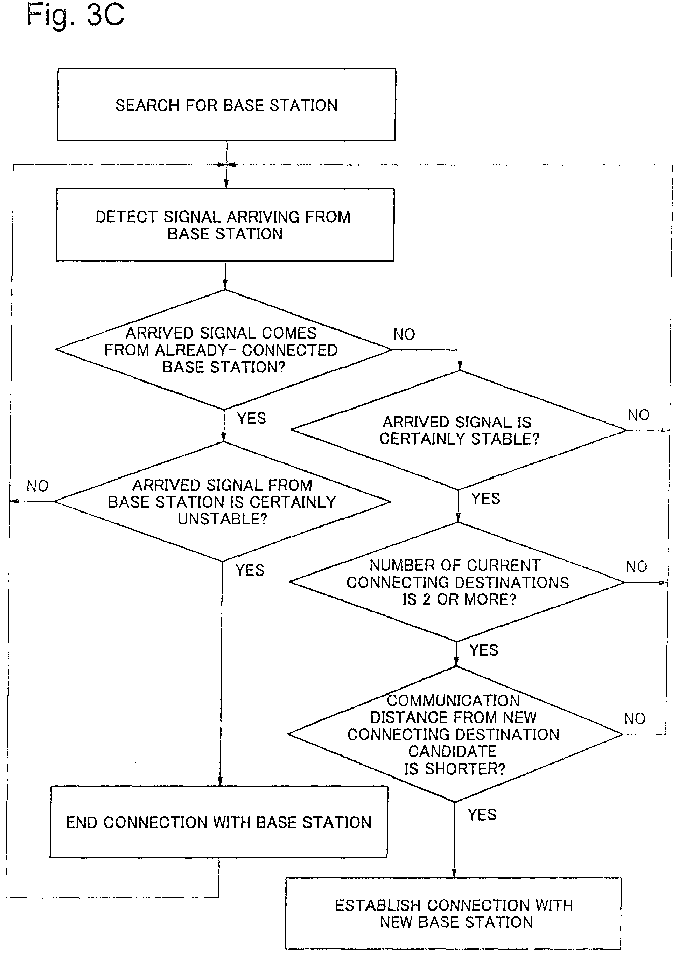

Firstly, a wireless communication system, a base station device, a mobile station device, and a wireless communication control method according to example embodiments of the present invention are explained. These example embodiments, as examples, relate to a method of handover control on a one-dimensional management control path based on TDMA. Fig. 2 is a block diagram showing a wireless communication system according to an example embodiment of the present invention. Fig. 3A is a flowchart for explaining behavior of a mobile station in Fig. 2. Fig. 3B is a flowchart for explaining one example of behavior of a base station in Fig. 2. Fig. 3C is a flowchart for explaining one example of behavior of the mobile station in Fig. 2.

The wireless communication system of this example embodiment is the one that communicates under the TDMA scheme and has a mobile station, a first base station, and a second base station.

A transceiver 10 of the mobile station, as shown in Fig. 2, has a connection stabilization unit 11 as one example of connection stabilization means, a congestion prevention unit 12 as one example of congestion prevention means, and an entry monitor unit 13 as one example of entry monitor means. Further, the transceiver 10 of the mobile station has a communication slot control unit 14 as one example of communication slot control means. The connection stabilization unit 11, the congestion prevention unit 12, the entry monitor unit 13, and the communication slot control unit 14 are configured with hardware or software that is a program for realizing them or the like.

A transceiver 20₁ of the first base station and a transceiver 20₂ of the second base station, as shown in Fig. 2, have a connection stabilization unit 21 as one example of connection stabilization means, a congestion prevention unit 22 as one example of congestion prevention means, and an entry monitor unit 23 as one example of entry monitor means. Further, the transceiver 20₁ of the first base station and the transceiver 20₂ of the second base station have a communication slot control unit 24 as one example of communication slot control means. These connection stabilization unit 21, congestion prevention unit 22, entry monitor unit 23, and communication slot control unit 24 are configured with hardware or software that is a program for realizing them or the like.

Detailed behavior is different between the connection stabilization unit 11, the congestion prevention unit 12, the entry monitor unit 13 and the communication slot control unit 14 that the mobile station has, and the connection stabilization unit 21, the congestion prevention unit 22, the entry monitor unit 23, and the communication slot control unit 24 that the base station has.

However, the respective means that the transceiver 20₁ of the first base station has and the respective means that the transceiver 20₂ of the second base station has are the same. Also, the means that the mobile station has and the means that another mobile station has are the same.

As the hardware for executing the respective means is small as described below, an algorithm for enabling behavior of both mobile and base stations may be loaded to the same hardware to enable the stations to be replaced by a physical switch or setting on software.

### (Connection Stabilization Means)

The connection stabilization means has a simple algorithm such that each mobile station (the first mobile station, the second mobile station, or the like) maintains connection with at least one or more base stations and updates information of a connecting destination. The connection stabilization means plays a key role in handover behavior because it selects a base station that each mobile station connects with. For decrease in handover instability, the connection stabilization means maintains connection of one mobile station with two base stations at the same time as long as possible.

The connection stabilization means includes the connection stabilization unit 11 that a mobile station has and the connection stabilization unit 21 that a base station has, and most of the processes are performed by the connection stabilization unit 11 on the mobile station side.

When a mobile station detects a signal arriving from a base station, the connection stabilization unit 11 of the mobile station determines whether the arriving signal has come from an already-connected or unconnected base station. For the signal from the already-connected base station, it is determined whether the signal arriving from the base station is certainly unstable or not, and in a "certainly unstable" case, the connection to this base station is terminated.

If the arriving signal does not come from the already-connected base station but the unconnected base station, it is determined whether the signal arriving from the base station is certainly stable or not and whether the number of current connecting destinations is a predetermined number or more. The following explains a case where the number of connecting destinations is two or more. It means one mobile station could be in a state of connecting with up to two base stations at the same time. If the signal arriving from the base station is "certainly stable" and the number of the current connecting destinations is two or more, it is determined whether a new candidate for a connecting destination has a shorter communication distance or not.

This means the communication distances from the base station of the new candidate for the connecting destination and from the already-connected base stations are compared. The mobile station, for example, references a preset distance information table, detects communication distance information based on a signal level of the signal arriving from the base station, and compares the communication distance information. If the base station of the new candidate for the connecting destination has a shorter communication distance, the connection with the base station of the new connecting destination candidate is established. If the communication distance from the new base station is certainly shorter than the communication distance from one of the already-connected base stations, the connecting destination is switched to the new base station. When this causes unstabilization of a signal arriving from a base station or a farther communication distance from a base station among the already-connected base stations, the connection with such base station is terminated.

Process flows of the connection stabilization unit 11, which are performed when a mobile station detects a signal arriving from a base station, are classified into the following three cases shown in Fig. 3A. The first is a case where a signal arriving from an unconnected base station is detected and a mobile station is in a state of having already connected with zero or one base station (Case R1). The second is a case where a signal arriving from an unconnected base station is also detected and a mobile station is in a state of connecting with two base stations (Case R2). The third is a case where a signal arriving from an already-connected base station is detected (Case R3).

If a case conforms to none of these although a mobile station detects a signal arriving from a base station, an existing connection state is maintained. It means this connection stabilization means has a status quo-oriented bias.

For certainty determination of whether a signal arriving from a base station is "certainly stable" or "certainly unstable", this example embodiment includes a counter for counting reception and non-reception and means for obtaining and transmitting location information. When a certain fixed value (for example, "10") is decided and signals are received 10 times in a row, it is determined that the receiving state is certainly stable and connection is requested of an unconnected communication partner.

Meanwhile, when signals are not received (reception failure) 10 times in a row from an already-connected communication partner, it is determined that the receiving state is certainly unstable and connection with such communication partner is canceled.

A case of existence of an already-connected base station satisfying a condition "a communication distance from an already-connected base station < a communication distance from an unconnected base station + a fixed value" is considered. If it is determined that this condition is satisfied and a communication distance from a new base station is sufficiently shorter than a communication distance from an existing base station, connection is requested of the new base station to switch a communication partner. In this case, the aforementioned fixed value of the communication distance (for example, "500 m") has been decided and the determination above is performed. The base station in this case has to inform an unconnected mobile station of its own location information. This method is explained along with the entry monitor means.

The connection stabilization unit 21 of a base station performs the following behavior. Firstly, if there is no connected mobile station and a signal sent from a mobile station is detected, transmission starts (the detection method is explained along with the entry monitor means). The transmission performed by the connection stabilization unit 21 is repeated the certain fixed number of times (for example, "10") since the last point in time when a signal sent from the mobile station is detected. This fixed number of times is equal to or greater than the number of continuous reception, based on which the aforementioned connection stabilization unit 11 on the mobile station side determines "it is certainly stable". This is the only behavior the connection stabilization unit 21 should execute.

If there is an already-connected mobile station, the existing communication may only continue until a connection request is received from a mobile station. To a signal sent by a base station, the (base station's) own ID (Identifier) and location information are always added as control information.

### (Congestion Prevention Means)

The congestion prevention means is a way performed for preventing a congestion problem caused in communication using TDMA. In TDMA, when a recipient receives a plurality of radio waves sent by different senders at the same hour, interference is caused and signals cannot be restored. Although there is a technique for restoring an original signal based on waveforms of radio waves causing interference, this example embodiment employs a method for preventing congestion by arranging communication slots and base stations in a manner of avoiding interference in advance so that such technology does not have to be used. The following explains details.

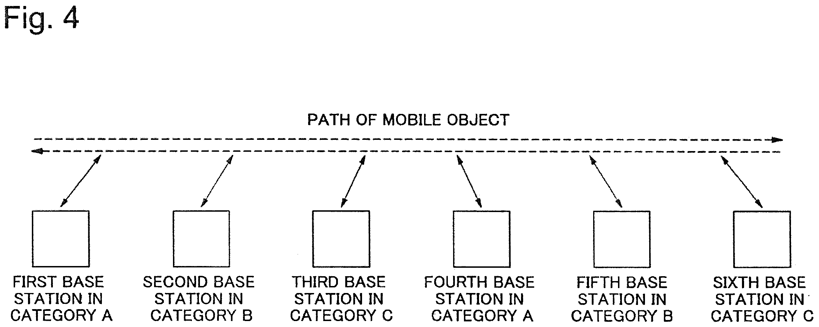

Fig. 4 is an overview diagram for explaining a path of a mobile object and a method of arranging base stations. In Fig. 4, base stations are classified into three categories (A, B, and C) and located in this order on a one-dimensional path. These categories are set to every base station in the congestion prevention unit 22 of a base station. This base station arrangement enables received signal strength to be suppressed to an extent that interference does not matter because, for example, from a mobile station connecting with a specific base station in the category A, the other base stations in the category A are farther than the connecting base station.

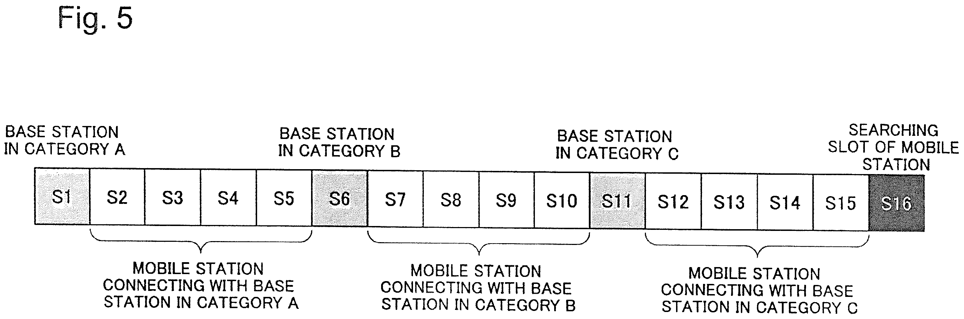

Fig. 5 shows a standard TDMA slot configuration (one frame) used in a wireless communication system of this example embodiment. Each base station has sending timing only in one slot within one frame. In Fig. 5, sending timing of a base station in the category A is a slot S1, sending timing of a base station in the category B is a slot S6, and sending timing of a base station in the category C is a slot S11.

Meanwhile, for each mobile station, possible sending timing is decided based on a category of a base station of its connecting destination. Sending timing of a mobile station that communicates with a base station in the category A is slots S2 to S5, sending timing of a mobile station that communicates with a base station in the category B is slots S7 to S10, and sending timing of a mobile station that communicates with a base station in the category C is slots S12 to S15.

In this case, there is no timing when a mobile station that does not connect with any base stations can send. Therefore, as shown in Fig. 5, a slot S16 is placed as a sending slot for a mobile station that does not connect with any base stations to search for a base station.

The arrangement order of slots S1 to S16 is arbitrary. It is only necessary that there are one sending slot for base stations in every category, a plurality of sending slots for mobile stations in each base station category, and a sending slot for a mobile station to search for a base station.

In Fig. 5, the number of sending time slots of a mobile station that communicates with a base station in the category A is four, S2 to S5, but this number is variable and may be 8, 10, or 16. This number shows how many mobile stations one base station can accommodate without dynamically changing its communication slot configuration.

Both of the congestion prevention unit 12 of a mobile station and the congestion prevention unit 22 of a base station are characterized only by having the aforementioned time slot configuration. However, random transmission, which the entry monitor means described below has and a mobile station performs, can be considered as part of the congestion prevention unit 12.

### (Entry Monitor Means)

The entry monitor means is a way mainly for a base station to detect existence of an approaching mobile station. In light of a mobile station, it can be said that this is a way to detect existence of a connectable base station. The entry monitor means includes the following two ways.

The first is that each of mobile stations and base stations receives signals in all time slots other than their own sending slots to acquire control information. This allows each mobile station to intercept communication of a base station that communicates with another mobile station and determine such base station based on ID information included in the control information. It means the entry monitor unit 13 of a mobile station has an algorithm for receiving control information in sending slots (S1, S6, and S11) of a base station. In contrast, each base station determines a mobile station that is communicating in its neighborhood. The entry monitor unit 23 of a base station has an algorithm for receiving control information in sending slots (S2 to S5, S7 to S10, and S12 to S15) of a mobile station.

The second is utilizing random transmission for search. A mobile station without any connected base stations randomly decides in each frame whether to send a radio wave in a searching slot (S16 in Fig. 5) or not. This allows congestion prevention and separate connection if a plurality of mobile stations enter a neighborhood of a base station at the same time. The entry monitor unit 13 of a mobile station has this algorithm. Behavior of a detected base station follows the connection stabilization unit 21 of a base station.

### (Communication Slot Control Means)

The communication slot control means controls time slots that each communicator (the first mobile station, the first base station, the second mobile station, the second base station, or the like) sends and receives radio waves based on control information.

This control information means an hour, GPS (Global Positioning System) information, ID information, and a variable derived by the aforementioned connection stabilization means, congestion prevention means and entry monitor means. The communication slot control means actually controls sending and receiving radio waves and maintains communication, so that the aforementioned connection stabilization means, congestion prevention means, and entry monitor means can keep executing each behavior repeatedly.

The communication slot control unit 24 of a base station retains IDs of all mobile stations connecting with such base station, and allocates sending slots of mobile stations in response to connection requests of mobile stations. Allocation may be made in a simple method of assigning empty slots in order.

As shown in Fig. 5, each base station has only one sending slot in one frame. Therefore, a base station specifies a plurality of IDs of communication partners (mobile stations) and sends data to these mobile stations at the same time. In other words, each base station transmits information to mobile stations under the multicast scheme.

The communication slot control unit 14 of a mobile station decides sending timing based on its own sending slot information notified by a base station, and communicates by using such slot. When connection is requested of the base station, control information including its base station ID is sent to the base station. A mobile station sends data to a base station by using a different slot for each base station. In other words, each mobile station transmits information to a base station under the unicast scheme.

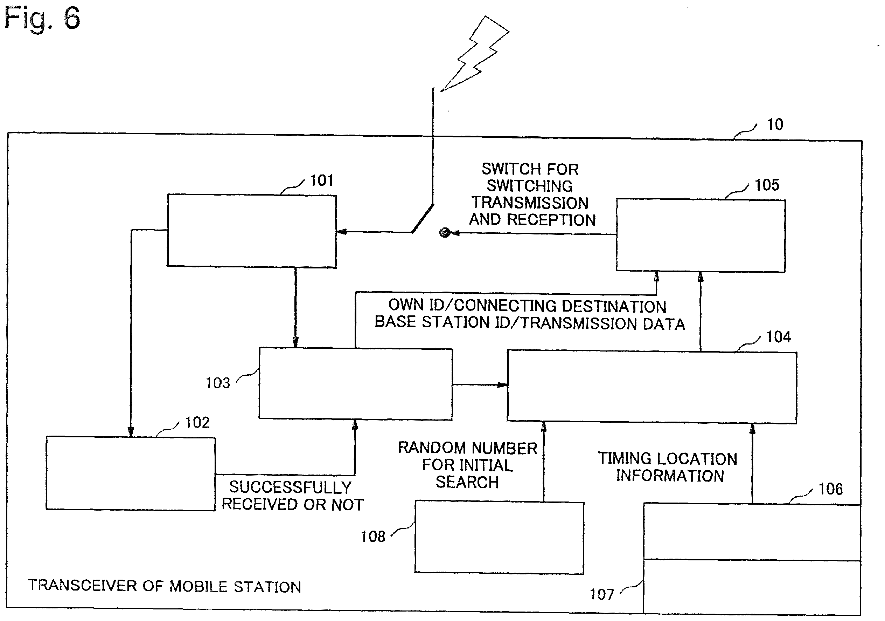

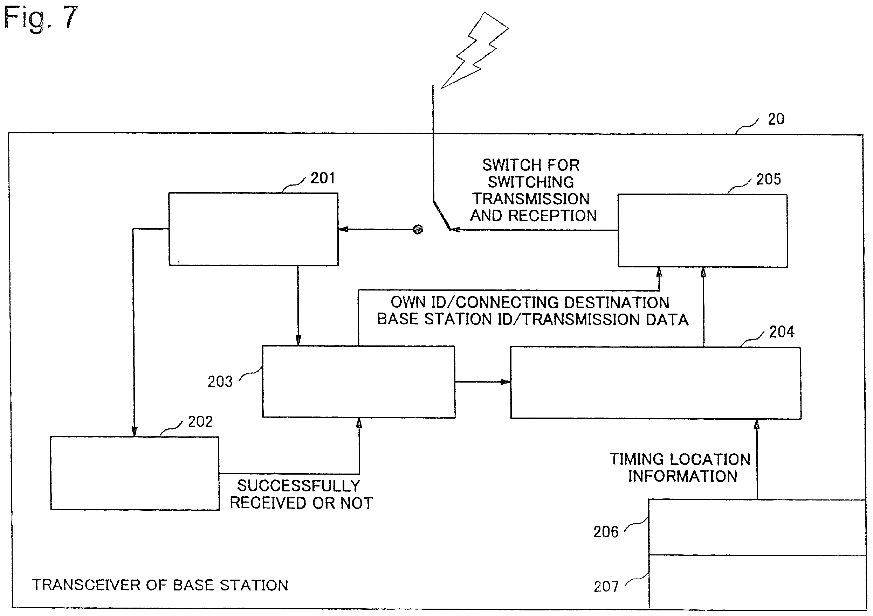

Next, detailed configuration examples of transceivers of a mobile station and a base station are explained with reference to Figs. 6 and 7. Fig. 6 is a block diagram showing a transceiver of a mobile station of this example embodiment. Fig. 7 is a block diagram showing a transceiver of a base station of this example embodiment.

### (Configuration of Mobile Station Transceiver)

The transceiver 10 of a mobile station has a demodulator 101, a reception determiner 102, control memory 103, a time frame controller 104, a modulator 105, a clock generator 106, a GPS receiver 107, and a random generator 108, as shown in Fig. 6. The connection stabilization unit 11, the congestion prevention unit 12, the entry monitor unit 13, and the communication slot control unit 14 in Fig. 2 are configured with the time frame controller 104 and the like.

The demodulator 101 converts received radio waves into a digital data string and stores a demodulation result in the control memory 103. A flow of communication data (user data) that is not used for control is omitted because the present invention relates to a handover control method, and user data is stored in user memory when the user data has to be retained.

The reception determiner 102 actually operates at the same time as demodulation. Therefore, the reception determiner 102 usually exists within the demodulator, but is separately shown for illustrative purposes. The reception determiner 102 determines whether a signal has been received in a current time slot or not and stores a result in the control memory 103.

The control memory 103 retains control information over a long time. All control memory retains an ID specific to such transceiver. The control memory 103 retains a connected base station ID, a sending slot number of the base station, the frequency of the consecutive non-reception for the mobile station, and its own sending slot number for the base station. When a signal is received from an unconnected base station in each slot number within a frame, the control memory 103 also retains the base station ID and the frequency of consecutive reception.

The time frame controller 104 references the control memory 103 and location information of the GPS receiver 107, and executes a connection stabilization process. Also, according to a timing signal generated by the clock generator 106, the time frame controller 104 decides specific sending start and stop timing corresponding to slot time set by the congestion prevention means. The time frame controller 104 references output of the random generator 108 and specifies random sending timing set by the entry monitor means. The time frame controller 104 includes a process device of the whole transceiver.

The modulator 105 modulates and sends transmission information at timing obtained from the time frame controller 104. The transmission information may include control information that the time frame controller 104 specifies as well as user data, which is scheduled to be sent to a sending destination included in the control information and which is read from user memory and combined to the control information.

The clock generator 106 generates and outputs a reference signal for time slot separation to the time frame controller 104. The GPS receiver 107 keeps updating hour and location information and allows the time frame controller 104 to reference the information. Reference of the hour and location information from the GPS receiver 107 eliminates effects of an unintentional communication failure. The random generator 108 returns at least a binary random number in response to a request from the time frame controller 104.

### (Configuration of Base Station Transceiver)

The transceiver 20 of a base station has a demodulator 201, a reception determiner 202, control memory 203, a time frame controller 204, a modulator 205, a clock generator 206, and a GPS receiver 207, as shown in Fig. 7. The connection stabilization unit 21, the congestion prevention unit 22, the entry monitor unit 23, and the communication slot control unit 24 in Fig. 2 are configured with the time frame controller 204 and the like.

The demodulator 201 converts received radio waves into a digital data string and stores a demodulation result in the control memory 203. A flow of communication data (user data) that is not used for control is omitted because the present invention relates to a handover control method, and user data is stored in user memory when the user data has to be retained.

The reception determiner 202 actually operates at the same time as demodulation. Therefore, the reception determiner 202 usually exists within the demodulator, but is separately shown for illustrative purposes. The reception determiner 202 determines whether a signal has been received in a current time slot or not and stores a result in the control memory 203.

The control memory 203 retains control information over a long time. All control memory retains an ID specific to such transceiver. The control memory 203 retains its own sending slot number, a connected mobile station ID, a sending slot number of the mobile station, and the frequency of consecutive non-reception for the mobile station. When a signal is received from an unconnected mobile station in each slot number within a frame, the control memory 203 also retains the mobile station ID and the most recent receiving timing.

The time frame controller 204 references the control memory 203 and location information of the GPS receiver 207, and executes a connection stabilization process. Also, according to a timing signal generated by the clock generator 206, the time frame controller 204 decides specific sending start and stop timing corresponding to slot time set by the congestion prevention means. The time frame controller 204 specifies sending timing. The time frame controller 104 includes a process device of the whole transceiver.

The modulator 205 modulates and sends transmission information at timing obtained from the time frame controller 204. The transmission information may include control information that the time frame controller 204 specifies as well as user data, which is scheduled to be sent to a sending destination included in the control information and which is read from user memory and combined to the control information.

The clock generator 206 generates and outputs a reference signal for time slot separation to the time frame controller 204. The GPS receiver 207 keeps updating hour and location information and allows the time frame controller 204 to reference the information. Reference of the hour and location information from the GPS receiver 207 eliminates effects of an unintentional communication failure. To the GPS receiver 207 of a base station, location information may be assigned by a method of manual setting or the like instead of equipment for automatically the updating location information.

### (Behavior of Time Frame Controller)

Respective behavior of the time frame controllers 104 and 204 is more specifically described. The time frame controller 104 references control memory for each time slot, determines sending or receiving timing, and obtains a sending partner ID for the sending timing and a receiving partner ID for the receiving timing. The receiving timing is S1, S6, and S11 in Fig. 5.

If any base stations are not connected in such slots, there is no receiving partner ID. Also, for timing of a searching slot (S16 in Fig. 5), it is decided whether to send or not on the basis of a value of the random generator 108 if there is no connecting destination ID in the control memory.

For the sending timing, its own ID and a sending destination ID are added to the control information and output to the modulator 105 with sending permission.

For the receiving timing, a determination result of the reception determiner 102 is referenced to update the frequency of consecutive non-reception corresponding to an already-connected base station ID, add an unconnected base station ID, and update the frequency of consecutive reception corresponding to such ID in the control memory 103. To execute the connection stabilization unit 11, these frequencies are compared with a threshold stored in the control memory 103.

Subsequently, according to Cases R1 and R3 above, a connecting destination ID and sending and receiving slot numbers are updated (added or deleted). The sending slot number is generated by the time frame controller 204 of a base station and included in a received signal in such slot. If, as a result of referencing the control memory 103, there are already two connecting destination IDs and execution of Case R2 above is required, its own location information is obtained by referencing the GPS receiver 107 to be compared with location information of a base station included in the received signal in such slot.

The time frame controller 204 of a base station references control memory for each time slot, determines sending or receiving timing, and obtains all sending partner IDs at such timing for the receiving timing and a receiving partner ID for the receiving timing.

The sending timing is a single time slot that is set according to its own category A, B, or C. The receiving timing is S2 to S5, S7 to S10, S12 to S15, and S16 in Fig. 5. For deciding the sending timing, not only connecting destination IDs and communication slot information retained by the control memory but also the most recent receiving timing information from an unconnected mobile station are referenced.

For the sending timing, its own ID, all sending destination IDs (not added before connection is confirmed), a sending slot number of each mobile station (not added before connection is confirmed), and its own location information are added to the control information and output to the modulator 105 with sending permission. It is noted that nothing is sent if there is no connecting destination ID and the most recent receiving timing from an unconnected mobile station has been had in the past over a threshold (for example, "10 times").

For the receiving timing, in the case of a sending slot of a mobile station communicating with such base station, a determination result of the reception determiner 202 is referenced to update the frequency of consecutive non-reception corresponding to an already-connected base station ID in the control memory 203. In this case, the sending slot of the mobile station communicating with the base station is S2 to S5 in Fig. 5 if such base station is in the category A.

In a sending slot of a mobile station communicating with a base station other than such base station and a searching slot (S16 in Fig. 5), if the most recent unconnected mobile station does not include such base station ID in connecting destinations, the most recent receiving timing from the unconnected mobile station is updated. If the most recent unconnected mobile station includes such base station ID in connecting destinations, it is determined whether to receive a connection request and an allocable slot number is selected by referencing the control memory 203. Connecting destination IDs are also updated.

### (Advantageous Effect by Example embodiment)

As explained above, a base station of this example embodiment always stops transmission when a mobile station does not exist in the neighborhood. This causes a base station of this example embodiment to be extremely power saving. According to this example embodiment, when a mobile station does not exist in the neighborhood, only the power related to a receiving process can be consumed and sending power of the base station can be almost zero. A system that requires transmission as often as, for example, several minutes per day only is extremely highly efficient.

A base station of this example embodiment creates minor disturbance to the external radio wave environment. TDMA is originally employed for the purpose of efficient use of radio waves, and further, having a base station in a sending state only when necessary and transmission stopped for the rest of time can reduce an impact on the external environment.

Furthermore, a smaller and lighter base station can be realized according to this example embodiment. As shown in Fig. 7, it is a handover control method that requires a small number of hardware components and enables communication to be realized with the minimum components only. Use in a special algorithm is not required and it is easy to replace each other because of dependence only on protocols.

Moreover, this invention is applicable regardless of network scale according to this example embodiment. To cases of one mobile station and one base station as well as many mobile stations and base stations that are widely spread, this can be similarly applied.

Further, in this embodiment, a probability that a mobile station is in a state without connection with any base stations, namely a loss probability, is low. Usually, a communication state is likely to get unstable during a handover, but because the communication control method of this example embodiment maintains communication with two stations at the same time around a handover hour, a diversity effect reduces a loss probability.

A handover moment is generally unstable and has a higher possibility to cause instantaneous interruption of communication. To avoid causing the instantaneous interruption, a handover is controlled by exchanging communication slot information of a mobile station on a one-dimensional path between a currently-communicating base station and a neighboring base station in PTL1. This method has a problem that at least one of the mobile station and the base station is likely to get large because of the necessity of a network between base stations, the necessity of frequency switch, the necessity of execution of large calculation, or the like.

On the other hand, because the example embodiment of the present invention maintains communication with two stations at the same time around a handover hour, a diversity effect reduces a loss probability. Also, both of reduction in instantaneous interruption at a handover time and a smaller and lighter base station can be realized.

### <Specific Examples>

What kinds of situations are assumed in specific examples relating to the present invention is explained.

In these specific examples, a mobile station is a flying object with various sensors, a base station is located on the ground, collects data obtained by the mobile station, and controls and manages the mobile station (as necessary). These situations could occur when data is collected for a study, which is infrequently undertaken, information is collected in the sky in a time of disaster, or the like.

In these cases, existence of a network between base stations cannot be expected. However, if there is a network between base stations and wireless communication is performed for a similar purpose, methods in these specific examples can be applied without change for the purpose of lighter weight and reduction in power saving.

In addition, because a communication target of a flying object, maintenance of handovers as stable as possible without disconnection can ensure safe and efficient flight (the continuous connection itself improves efficiency because a flying object is difficult to find again once it is lost).

### (Specific Example 1)

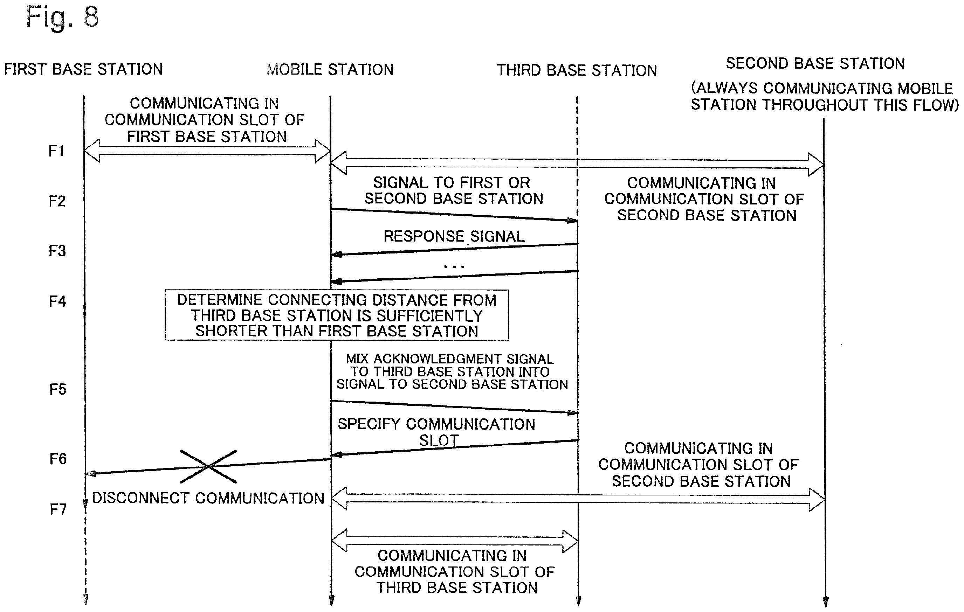

Fig. 8 is a sequence diagram for explaining one example of a handover flow of this example embodiment. Fig. 8 shows the most basic handover flow. The figure starts at a situation where a mobile station initially connects with and communicates with the first and second base stations, and shows a sequence where a handover is performed, the connection with the first base station is disconnected, and the situation moves on to communication with the second and third base stations. In this case, there is no network between the base stations.

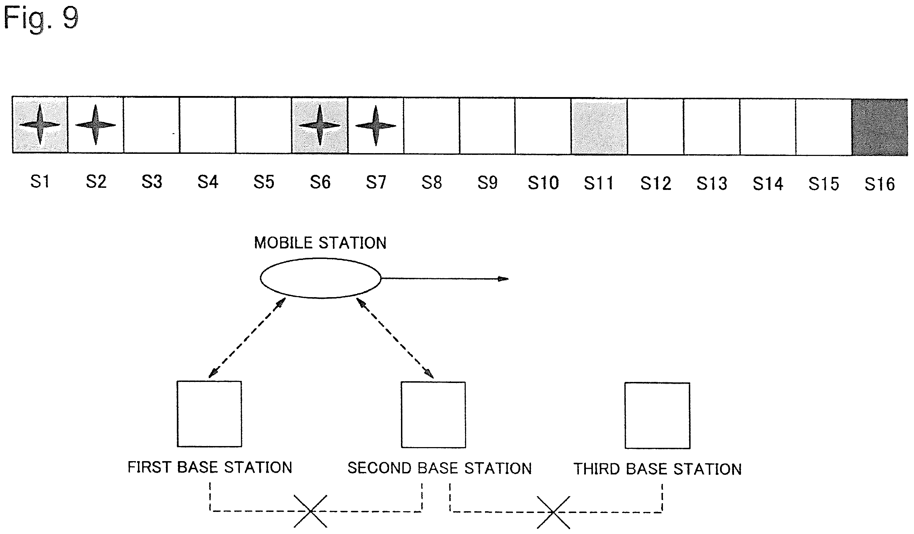

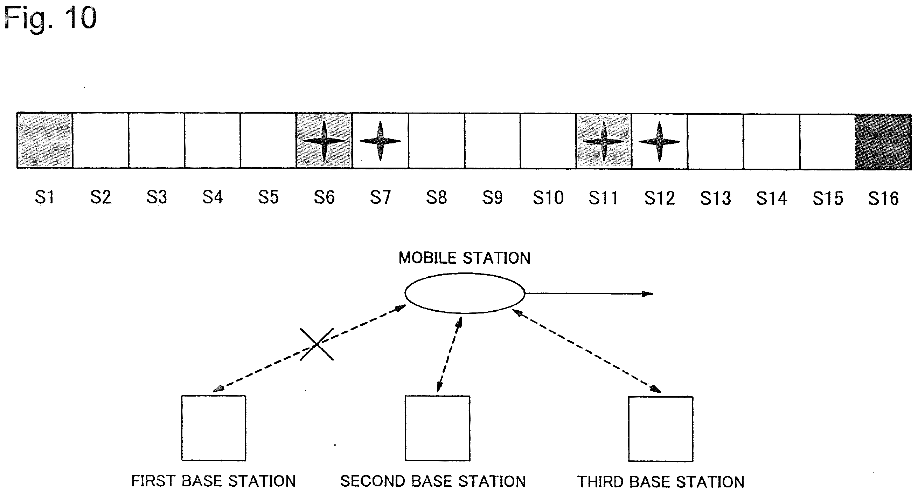

Fig. 9 is time frame and space diagrams showing a beginning situation in Fig. 8. Star-shaped symbols in the time frame diagram show that senders exist in those time slots. The first base station belongs to the category A, the second base station belongs to the category B, and the third base station belongs to the category C. In Fig. 9, both cases where there is and is not a base station in the category C on the left side of the first base station could be possible. Fig. 10 is time frame and space diagrams showing a situation after a mobile station travels. Fig. 10 shows a situation after a handover.

The following explains a sequence in Fig. 8, and behavior in order of Flow F1 to F7.

### Flow F1: Before a handover

Before a handover, a mobile station connects with and communicates with the first and second base stations. It means the control memory of the mobile station (the control memory 103 in Fig. 6) stores the first and second base station IDs as connecting destination IDs.

The mobile station receives a signal from the first base station in a receiving slot from the first base station (S1 in Fig. 9). The mobile station determines that its own ID is included as a sending destination ID in this signal and it is successfully received. The signal is demodulated into user information, and management control information or the like, if any, is stored in user memory. The mobile station sends control information, such as the first base station ID, and the user information together in a sending slot to the first base station (S2 in Fig. 9). The user information includes sensor information obtained by the mobile station or the like. Next, the mobile station receives a signal in a receiving slot from the second base station (S6 in Fig. 9) as with the case of the first base station. The mobile station, in turn, sends control information, such as the second base station ID, and the user information together in a sending slot to the second base station (S7 in Fig. 9).

In TDMA slots in Fig. 9, a sending slot from the mobile station to the first base station and a sending slot to the first base station are different. This enables sending separate user information (different sensor information, complementary information of the other, or the like) as well as sending the same user information (simultaneous delivery, double log, or the like) to the first and second base stations.

The first and second base stations retain the mobile station ID as a connecting destination in control memory (the control memory 203 in Fig. 6).

### Flow F2: Mobile station entry detection by a base station

The third base station stops transmission in just the previous flow F1. Therefore, the mobile station cannot detect existence of the third base station, but the third base station can receive a signal that the mobile station sends to another station, and detect entry of the mobile station. Only the power related to a receiving process is consumed and sending power is almost zero because the third base station always stops transmission at the time of non-existence of the mobile station in the neighborhood. The third base station successfully demodulates a signal and determines the signal is successfully received in either sending slot S2 or S7 of the mobile station for the first time.

### Flow F3: Response signal transmission by a base station

The third base station determines that a sender of such signal is an unconnected mobile station because its own ID is not included in such received signal, and starts sending a response signal in the next sending slot S11 of the third base station.

The response signal does not include the mobile station ID as a sending destination (no sending destination ID) because the mobile station and the third base station have not been connected yet. The third base station continues sending the response signal in the sending slot S11 for ten frames from the most recent time of receiving the signal from the mobile station. It is noted that the power consumption is extremely low compared with the case of connecting to communicate along with user data because the response signal consists of short control data only.

### Flow F4: Connecting destination switch by the connection stabilization means

The mobile station receives the signal from the third base station in the receiving slot S11. The mobile station newly adds the third base station ID in the control memory (the control memory 103 in Fig. 6), and retains a numeric value of a consecutive reception counter.

If the counter for counting consecutive reception reaches ten (ten frames) (in this case, the counter does not have to count 11 or more), the mobile station compares distances between the mobile station and the first base station, the mobile station and the second base station, and the mobile station and the third base station.

For this comparison, the third base station's location information that the signal from the third base station includes is used. In addition, the first base station's location information that a received signal from the first base station includes and the second base station's location information that a received signal from the second base station includes are used. Furthermore, self-location information obtained from a GPS receiver of the mobile station itself (the GPS receiver 107 in Fig. 6) is used.

As the distance between the mobile station and the first base station increases and the distance between the mobile station and the third base station decreases, the distance between the mobile station and the first base station becomes larger than a value of adding 500 m to the distance between the mobile station and the third base station at a certain timing. At this point, the mobile station deletes the first base station ID from the connecting destination IDs in the control memory (the control memory 103 in Fig. 6), and instead adds the third base station ID.

### Flow F5: Connection request through an existing line

Although the mobile station retains the second and third base station IDs as the connecting destination IDs at this point, the third base station does not retain a sending slot number from the mobile station. Therefore, a sending slot number that the mobile station retains is only the sending slot S7 to the second base station. In the sending slot S7, the mobile station requests connection of the third base station by adding the third base station to connecting destination IDs to send. It means the mobile station mixes an acknowledgment signal to the third base station into a signal to the second base station to send.

It may be considered as a disconnection request not to include the first base station in the connecting destination IDs sent by the mobile station or a disconnection may be expressly requested in such slot. With the disconnection request, the first base station deletes the mobile station ID from the connecting destination IDs.

It is noted that user data is for the second base station because the communicating destination ID in such slot is the second base station ID.

### Flow F6: Communication slot allocation

As the third base station receives a signal including the connecting destination ID for the third base station from the mobile station in the receiving slot S7, the third base station determines the acknowledgment and allocates a communication slot between the mobile station and the third base station (S12 in Fig. 10). It means the third base station specifies the communication slot to the mobile station.

### Flow F7: End of handover

At this point, the mobile station disconnects the communication with the first base station. It means the mobile station ends the communication with the first base station (S1 and S2 in Fig. 9) and starts the communication with the third base station (S11 and S12 of Fig. 10). A destination of the user data sent by the mobile station to the first base station is also changed to the third base station, and the data can be retrieved from both stations and coupled. As the mobile station spatially travels, this flow is repeated.

### (Specific Example 2)

Next, a flow including a case where a mobile station joins a network when the mobile station does not connect with any base stations in its initial state is explained. Also, a situation where a base station at a handover destination has an already-connected mobile station is assumed. The mobile station that has already connected with the base station at the handover destination has a small location variation. This means a situation where one of mobile stations continuously collects information with swiveling in the sky of a certain area or where plural kinds of mobile stations with different travel rates are mixed.

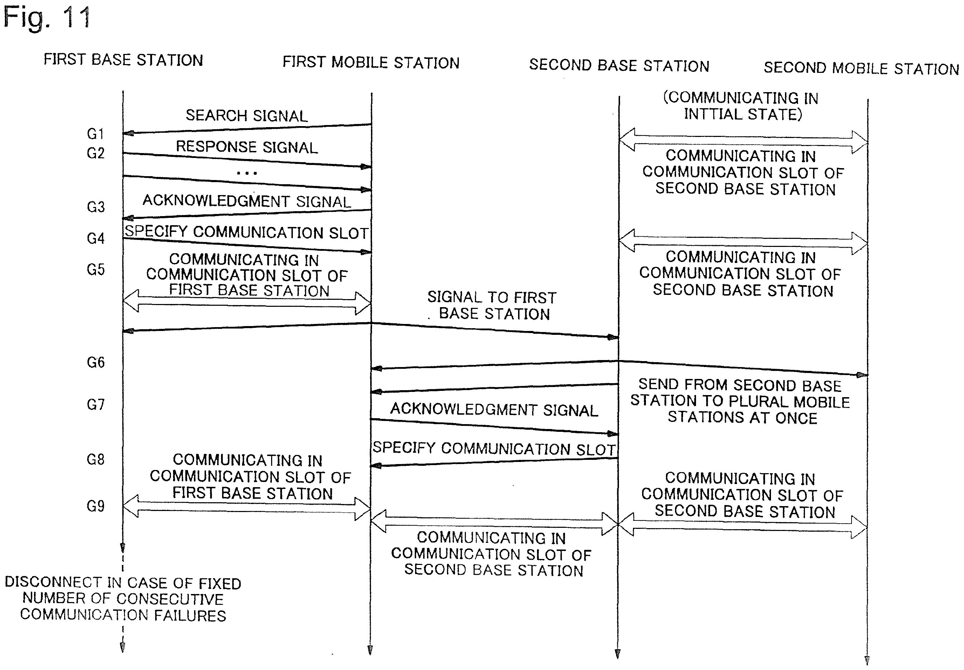

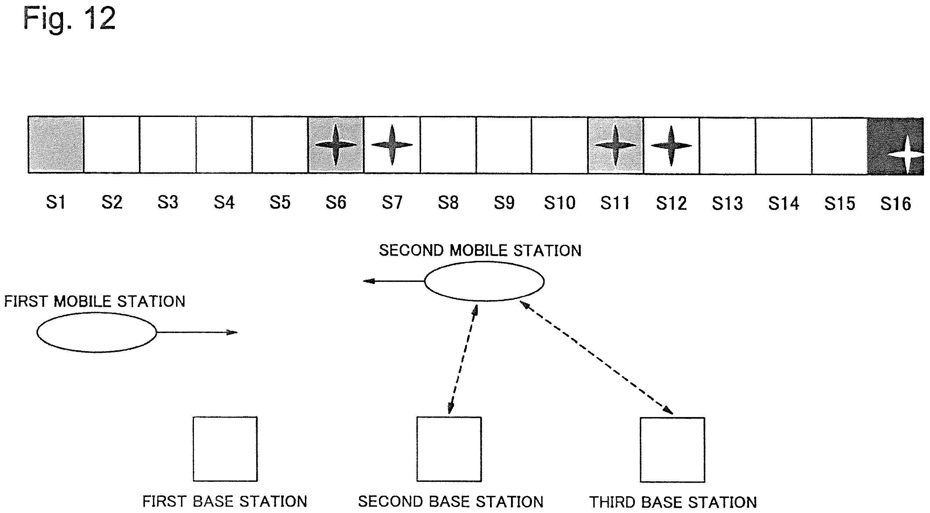

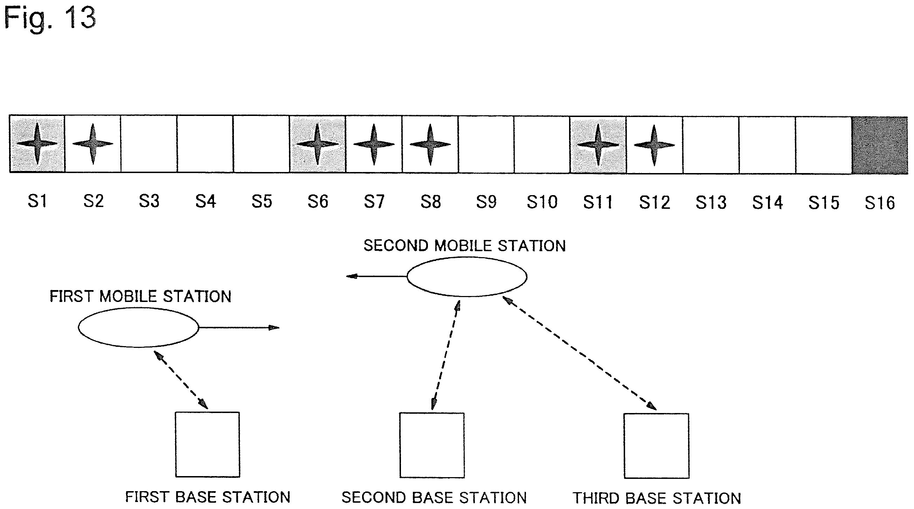

Fig. 11 is a flow of starting at a state where the first mobile station does not connect with any base stations and showing behavior of the first mobile station that also connects with the second base station already connected with the second mobile station after initially connecting with the first base station. Fig. 12 is time frame and space diagrams showing a beginning situation in Fig. 11. Fig. 13 is time frame and space diagrams showing a situation after the first mobile station travels. Fig. 13 shows a state where the first mobile station connects with the first base station in the aforementioned flow.

In Figs. 12 and 13, the second mobile station is always in the sky around the second and third base stations and does not change its state. Therefore, description of the third base station is omitted in Fig. 10.

In the sequence diagram of Fig. 11, the first mobile station is eventually in a state of connecting with both of the first and second base stations. After this flow, there could be the case where the first mobile station disconnects the first base station in exchange for connecting with the third base station, as shown in (Specific Example 1), and the case where the first mobile station cannot communicate with and disconnects the first base station even without connecting with the third base station.

### Flow G1: Base station search by a mobile station

The first mobile station only sends in the searching slot S16 because the first mobile station does not retain a connecting destination ID. It means the first mobile station sends a search signal only in the searching slot S16 and searches for a base station. The first mobile station references outputs of the random generator (the random generator 108 in Fig. 6) at the sending timing S16 in each frame and determines whether to send at such timing. In the searching slot S16, only control data is sent even in a case of sending.

### Flow G2: Response signal transmission by a base station

The first base station stops transmission in an initial state, but sends a response signal similarly to (Specific Example 1) when a signal from the first mobile station is received in the slot S16. A sending slot of the response signal is S1 because the first base station belongs to the category A.

### Flow G3: Connection by the connection stabilization means

When the first mobile station receives the response signal from the first base station in the slot S1 ten times in a row, a signal including the first base station ID (an acknowledgment signal) is sent in the slot S16 and connection is requested. This is because the first mobile station has zero connecting destination IDs, and after reception ten-times in a row, the first base station ID is added to the connecting destination ID (Case R1).

### Flow G4: Communication slot allocation (1)

When the first base station receives a connection request including its own ID in a signal from the first mobile station in the slot S16, the first mobile station is added in connecting destination IDs and the communication slot S2 is allocated to the first mobile station. It means a communication slot is specified. The first base station sends a control signal including the first mobile station ID and the communication slot number S2 with user data in the slot S1.

### Flow G5: One-to-one communication establishment

The first mobile station obtains the sending slot number (the slot S2) from a signal received from the first base station in the slot S1 and stores the sending slot number in its own control memory. The first mobile station and the first base station subsequently communicate along with control and user data, using the communication slots S2 and S1. There is no transmission in the searching slot S16 because the first mobile station has a connecting destination base station ID. At this point, the situation moves on from Fig. 12 to 13.

### Flow G6: Base station detection by the mobile station

The second base station connects with the second mobile station in the initial state (Fig. 11) and the state of Fig. 12, and sends to the second mobile station in the sending slot S6. Therefore, the second base station can receive a signal sent by the first mobile station, but does not have to determine anything related to that, and the first mobile station can directly count the frequency of reception of signals sent to the second mobile station by the second base station. When the first mobile station receives signals sent by the second base station in the slot S6 ten times in a row, the first mobile station adds the second base station ID to the connecting destination IDs.

### Flow G7: Connection request through an existing line

The first mobile station retains the second base station ID as the connecting destination ID, but does not retain a sending slot number to the second base station. Thus, in the sending slot S2 to the first base station similarly to (Specific Example 1), connection is requested of the second base station by adding the second base station ID to the connecting destination IDs to send. It means the first mobile station sends an acknowledgment signal and requests connection of the second base station in the sending slot S2.

### Flow G8: Communication slot allocation (2)

The second base station detects that its own station ID is included in a received signal in the slot S2 and accepts the connection request. The second base station has already connected with the second mobile station and the slot S7 of the sending slots of the mobile station to a base station in the category B has been already allocated. The second base station references control memory to obtain an unallocated slot number and allocates the slot S8 as a new communication slot to communication with the first mobile station. The second base station adds the first and second mobile station IDs as the connecting destination IDs and the slots S7 and S8 as each sending slot to the control data, and sends in the sending slot S6.

### Flow G9: Multicast transmission of a base station

The first mobile station detects its own station ID and the allocated slot number in the signal sent by the second base station in the receiving slot S6, and stores the allocated slot number (the slot S8) in the control memory. Communication with the second base station subsequently starts in the slot S8. At this point, the situation moves on from Fig. 12 to 13. The first mobile station delivers control data and user data in response to the requests to each of the first and second base stations in the slots S2 and S8. On the other hand, the second base station sends control data and user data to the first and second mobile stations in the slot S6. Therefore, the second base station performs multicast transmission including user data in the slot S6.

### <Other Example embodiments>

### (Handover control when a base station network exists)

The above example embodiments are explained on the assumption that there is no base station network among base stations. The present invention does not presuppose the existence of a base station network, but can be utilized as a low-cost handover control method even if there is a base station network. If the base station network exists, communication states of all mobile stations and data transmission and reception can be managed in an integrated fashion.

### (Connection between isolated networks)

In an example embodiment of the present invention, a mobile station has a period of connecting with two base stations during a handover. Therefore, if base station networks are separated between these two base stations, it can be considered that two isolated networks are connected via the mobile station. Use of the communication control method of the present invention without change can realize this information relay transmission.

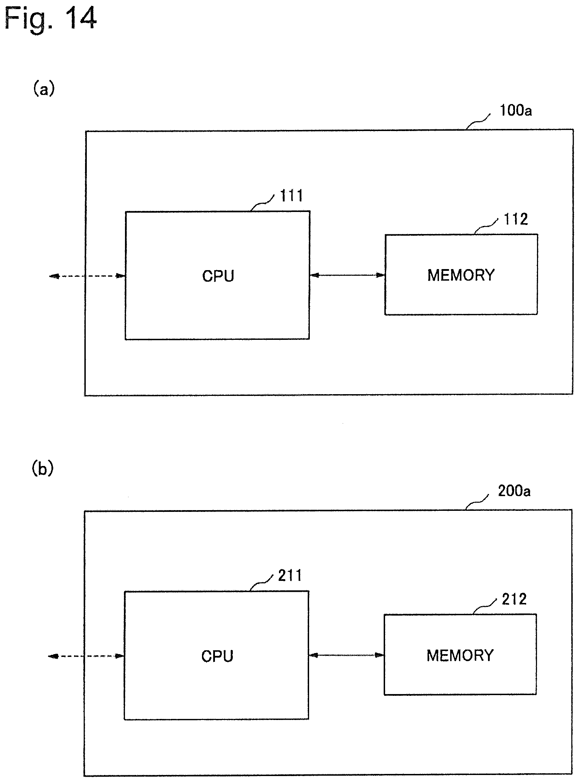

Fig. 14 (a) is a block diagram showing a mobile station device of another example embodiment of the present invention, and Fig. 14 (b) is a block diagram showing a base station device of another example embodiment of the present invention. A mobile station device 100a in Fig. 14 (a) includes a CPU (Central Processing Unit) 111 and memory 112 as one example of a process unit. The mobile station device 100a in Fig. 14 (a) reads a program into the memory 112 for executing processes of searching for a base station in a searching slot included in the TDMA slot and transmitting information to a base station under the unicast scheme. Also, the mobile station device 100a detects a signal arriving from a base station to establish connection with a new base station when the signal arriving from the new base station above is stable enough, and read a program into the memory 112 for executing a process of avoiding establishing connection with the new base station above when the signal arriving from the new base station is unstable enough. In addition, the mobile station device 100a, in a state of connecting with the predetermined number of base stations, establishes connection with a new base station when the signal arriving from the new base station above is stable enough, and reads a program into the memory 112 for executing a process of avoiding establishing connection with the new base station above when the signal arriving from the new base station is unstable enough. When the mobile station device 100a in Fig. 14 (a) is in the state of connecting with the predetermined number of base stations and establishes connection with a new base station, a program for executing a process of switching connection from an already-connected base station to the new base station above is read into the memory 112. Further, the CPU 111 executes these base station search, information transmitting, and connection establishing processes.

It is noted that this program could be distributed in the form of a recording medium for controlling a mobile station device, for example, a general-purpose semiconductor storage device, such as CF (Compact Flash (a registered trademark)) and SD (Secure Digital), a magnetic recording medium, such as a flexible disk, or an optical recording medium, such as CD-ROM (Compact Disc Read Only Memory). The mobile station device of this example embodiment may be realized as software by reading a program stored in this recording medium and executing the base station search, information transmitting, and connection establishing processes of the mobile station device 100a.

A base station device 200a in Fig. 14 (b) includes a CPU 211 and memory 212 as one example of a process unit. The base station device 200a in Fig. 14 (b) reads into the memory 212 a program for executing processes of stopping sending a signal including control information related to communication connection and monitoring mobile station entry by receiving a signal that a mobile station sends to another base station when there is no mobile station therearound. The base station device 200a also reads a program into the memory 212 for executing a process of transmitting information to a mobile station under the multicast scheme. Further, CPU 211 executes these processes of stopping sending signals, monitoring entry, and transmitting information.

It is noted that this program could be distributed in the form of a recording medium for controlling a base station device, for example, a general-purpose semiconductor storage device, such as CF and SD, a magnetic recording medium, such as a flexible disk, or an optical recording medium, such as CD-ROM. The base station device of this example embodiment may be realized as software by reading a program stored in this recording medium and by the base station device 200a executing the processes of stopping sending signals, monitoring entry, and transmitting information.

As described above, the preferred example embodiments and specific examples of the present invention are explained, and the present invention is not limited to these. It goes without saying that a variety of modifications are possible within the range of the invention described in the claims and they are also included in the range of the present invention.

A part or all of the aforementioned example embodiments could be also described as, but not limited to, the following supplementary notes.
(Supplementary note 1) A wireless communication system for communicating under a TDMA (Time Division Multiple Access) scheme, having: a mobile station, and a base station communicating with the mobile station wherein the base station stops sending a signal including control information related to communication connection when there is none of the mobile station therearound.
(Supplementary note 2) The wireless communication system of supplementary note 1, wherein a TDMA slot includes a sending slot of the base station, a sending slot of the mobile station, and a searching slot of the mobile station, and the mobile station searches for the base station in the searching slot.
(Supplementary note 3) The wireless communication system of supplementary note 1 or 2, wherein the base station transmits information to the mobile station under a multicast scheme and the mobile station transmits information to the base station under a unicast scheme.
(Supplementary note 4) The wireless communication system of any one of supplementary notes 1 to 3, wherein the mobile station detects a signal arriving from a base station to establish connection with a new base station when a signal arriving from the new base station is stable enough, and to avoid establishing connection with the new base station when the signal arriving from the new base station is unstable enough.
(Supplementary note 5) The wireless communication system of supplementary note 4, wherein the mobile station is in a state of connecting with a predetermined number of base stations, and establishes connection with the new base station when the signal arriving from the new base station is stable enough and avoids establishing connection with the new base station when the signal arriving from the new base station is unstable enough.
(Supplementary note 6) The wireless communication system of supplementary note 5, wherein the mobile station is in a state of connecting with a predetermined number of base stations and switches connection from an already-connected base station to a new base station when connection with the new base station is established.
(Supplementary note 7) A base station device, communicating with a mobile station under a TDMA (Time Division Multiple Access) scheme, and stopping sending a signal including control information related to communication connection when there is none of the mobile station therearound.
(Supplementary note 8) The base station device of supplementary note 7, having entry monitor means of monitoring mobile station entry by receiving a signal that the mobile station sends to another base station.
(Supplementary note 9) The base station device of supplementary note 7 or 8, transmitting information to the mobile station under a multicast scheme, wherein the mobile station transmits information under a unicast scheme.
(Supplementary note 10) A mobile station device, communicating with a mobile station under a TDMA (Time Division Multiple Access) scheme, wherein a TDMA slot includes a sending slot of the base station, a sending slot of a mobile station and a searching slot of a mobile station, and the base station is searched for in the sending slot.
(Supplementary note 11) The mobile station device of supplementary note 10, wherein the base station transmits information under a multicast scheme and the mobile station transmits information under a unicast scheme.
(Supplementary note 12) The mobile station device of supplementary note 10 or 11, detecting a signal arriving from the base station to establish connection with a new base station when a signal arriving from the new base station is stable enough, and to avoid establishing connection with the new base station when the signal arriving from the new base station is unstable enough.
(Supplementary note 13) The mobile station device of supplementary note 10 or 11, in a state of connecting with a predetermined number of base stations, establishing connection with a new base station when the signal arriving from the new base station is stable enough, and avoiding establishing connection with the new base station when the signal arriving from the new base station is unstable enough.
(Supplementary note 14) The mobile station device of supplementary note 13, in a state of connecting with a predetermined number of base stations, switching connection from an already-connected base station to a new base station when connection with the new base station is established.
(Supplementary note 15) A wireless communication control method, wherein a base station stops sending a signal including control information related to communication connection when there is none of a mobile station therearound in the wireless communication control method of the base station and the mobile station communicating under a TDMA (Time Division Multiple Access) scheme.
(Supplementary note 16) The wireless communication control method of supplementary note 15, wherein a TDMA slot includes a sending slot of the base station, a sending slot of the mobile station and a searching slot of the mobile station and the mobile station searches for the base station in the searching slot.
(Supplementary note 17) The wireless communication control method of supplementary note 15 or 16, wherein the base station transmits information to the mobile station under a multicast scheme and the mobile station transmits information to the base station under a unicast scheme.
(Supplementary note 18) The wireless communication control method of any one of supplementary notes 15 to 17, wherein the mobile station detects a signal arriving from a base station to establish connection with a new base station when a signal arriving from the new base station is stable enough, and to avoid establishing connection with the new base station when the signal arriving from the new base station is unstable enough.
(Supplementary note 19) The wireless communication control method of any one of supplementary notes 15 to 17, wherein the mobile station is in a state of connecting with a predetermined number of base stations, and establishes connection with the new base station when the signal arriving from the new base station is stable enough and avoids establishing connection with the new base station when the signal arriving from the new base station is unstable enough.
(Supplementary note 20) The wireless communication control method of supplementary note 19, wherein the mobile station is in a state of connecting with a predetermined number of base stations, and switches connection from an already-connected base station to a new base station when connection with the new base station is established.
(Supplementary note 21) A recording medium of storing a program for controlling a base station device communicating with a mobile station under a TDMA (Time Division Multiple Access) scheme, storing a program which makes a computer execute a process of stopping sending a signal including control information related to communication connection when there is none of the mobile station therearound.
(Supplementary note 22) The recording medium of storing a program of supplementary note 21, executing a process of monitoring mobile station entry by receiving a signal that the mobile station sends to another base station.
(Supplementary note 23) The recording medium of storing a program of supplementary note 21 or 22, executing a process of transmitting information to the mobile station under a multicast scheme.
(Supplementary note 24) A recording medium of storing a program for controlling a mobile station device communicating with a base station under a TDMA (Time Division Multiple Access) scheme, storing a program which makes a computer execute a process of searching for the base station in a search slot included in a TDMA slot.
(Supplementary note 25) The recording medium of storing a program of supplementary note 25, executing a process of transmitting information to the base station under a unicast scheme.
(Supplementary note 26) The recording medium of storing a program of supplementary note 24 or 25, executing a process of detecting a signal arriving from the base station to establish connection with a new base station when a signal arriving from the new base station is stable enough, and to avoid establishing connection with the new base station when the signal arriving from the new base station is unstable enough.
(Supplementary note 27) The recording medium of storing a program of supplementary note 24 or 25, executing a process of establishing connection with a new base station when the signal arriving from the new base station is stable enough and avoiding establishing connection with the new base station when the signal arriving from the new base station is unstable enough in a state of connecting with a predetermined number of base stations.
(Supplementary note 28) The recording medium of storing a program of supplementary note 27, executing a process of switching connection from an already-connected base station to a new base station when connection the new base station is established in a state of connecting with a predetermined number of base stations.

As described above, the present invention is explained using the aforementioned example embodiments and specific examples as good examples. However, the present invention is not limited to the aforementioned example embodiments or specific examples. It means the present invention can apply various aspects that those skilled in the art could understand within the scope of the present invention.

This application is based upon and claims the benefit of priority from Japanese Patent Application No. 2015-31213, filed on February 20, 2015, the disclosure of which is incorporated herein in its entirety by reference.

### [Industrial Applicability]

As an example of the present invention utilization, it could be possibly considered that base stations of communication connecting destinations stably keep being switched for a flying object on a one-dimensional management control path to maintain TDMA communication.

### [Reference Signs List]

100, 100₁, 100₂ Mobile station
200, 200₁, 200₂, 200_{N} Base station
10, 20, 20₁, 20₂ Transceiver
11, 21 Connection stabilization unit
12, 22 Congestion prevention unit
13, 23 Entry monitor unit
14, 24 Communication slot control unit
101, 201 Demodulator
102, 202 Reception determiner
103, 203 Control memory
104, 204 Time frame controller
105, 205 Modulator
106, 206 Clock generator
107, 207 GPS receiver
108 Random generator

## Claims

1. A wireless communication system for communicating under a TDMA (Time Division Multiple Access) scheme, having:
a mobile station, and
a base station communicates with the mobile station, and stops sending a signal including control information related to communication connection when there is none of the mobile station therearound.

2. The wireless communication system according to Claim 1, wherein
a TDMA slot includes a sending slot of the base station, a sending slot of the mobile station, and a searching slot of the mobile station, and
the mobile station searches for the base station in the searching slot.

3. The wireless communication system according to Claim 1 or 2, wherein the base station transmits information to the mobile station under a multicast scheme, and the mobile station transmits information to the base station under a unicast scheme.

4. The wireless communication system according to any one of Claims 1 to 3, wherein the mobile station detects a signal arriving from a base station to establish connection with a new base station when a signal arriving from the new base station is stable enough, and to avoid establishing connection with the new base station when the signal arriving from the new base station is unstable enough.

5. The wireless communication system according to Claim 4, wherein the mobile station is in a state of connecting with a predetermined number of base stations, and establishes connection with the new base station when the signal arriving from the new base station is stable enough and avoids establishing connection with the new base station when the signal arriving from the new base station is unstable enough.

6. The wireless communication system according to Claim 5, wherein the mobile station is in a state of connecting with a predetermined number of base stations and switches connection from an already-connected base station to a new base station when connection with the new base station is established.

7. A base station device, communicating with a mobile station under a TDMA (Time Division Multiple Access) scheme, the base station device stopping sending a signal including control information related to communication connection when there is none of the mobile station therearound.

8. The base station device according to Claim 7, having entry monitor means for monitoring mobile station entry by receiving a signal that the mobile station sends to another base station.

9. A mobile station device, communicating with a base station under a TDMA (Time Division Multiple Access) scheme, wherein
a TDMA slot includes a sending slot of the base station, a sending slot of a mobile station and a searching slot of a mobile station, and
the base station is searched for in the sending slot.

10. A method for controlling wireless communication between a base station and a mobile station communicating under a TDMA (Time Division Multiple Access) scheme, wherein
the base station stops sending a signal including control information related to communication connection when there is none of a mobile station therearound.
